# EUROPEAN PATENT SPECIFICATION

(11) **EP 3 601 466 B1**
(45) Date of publication and mention of the grant of the patent: **28.01.2026**
(21) Application number: 17903451.7
(22) Date of filing: 30.03.2017
(51) Int. Cl.: C09J 175/04, C08G 18/32, C08G 18/42, C08G 18/48, C09J 7/00, C08G 18/12, B32B 7/12, B32B 15/08, B32B 15/12, B32B 15/20, B32B 27/40, C08G 18/40, C08G 18/66, C08G 18/75, C08G 18/76

(54) **MOISTURE-CURABLE POLYURETHANE HOT-MELT RESIN COMPOSITION**
FEUCHTIGKEITSHÄRTBARE POLYURETHAN-HEISSCHMELZHARZZUSAMMENSETZUNG
COMPOSITION DE RÉSINE THERMOFUSIBLE DE POLYURÉTHANE DURCISSABLE À L'HUMIDITÉ

(43) Date of publication of application: 05.02.2020
(73) Proprietor: Arkema France, 92800 Puteaux (FR)
(72) Inventor: SHI, Rui, Shanghai 201203 (CN); BAI, Chenyan, Shanghai 201203 (CN)
(74) Representative: Bandpay & Greuter
(86) International application number: PCT/CN2017/078708
(87) International publication number: WO 2018/176299

(56) References cited:
- EP-A2- 0 490 026
- EP-B1- 1 789 465
- WO-A1-2017/038195
- CN-A- 1 325 430
- CN-A- 102 781 992
- JP-A- 2005 146 201
- US-A- 5 532 058
- US-A1- 2003 092 868
- US-A1- 2004 072 952
- US-A1- 2007 179 254

## Description

### FIELD OF THE DISCLOSURE

The present disclosure relates to a moisture-curable polyurethane hot-melt resin compositions having improved bond strength, and heat seal strength for paper/foil lamination. The present disclosure also relates to adhesives and articles in which such compositions are used.

### BACKGROUND OF THE DISCLOSURE

Conventional reactive polyurethane hot-melt adhesives are utilized in packaging, paper converting, paper construction, bookbinding, cartons, case sealing, construction, automotive, and the like. The reactive polyurethane hot-melt adhesives create a very durable product and are particularly useful in the manufacture of packages and textbooks.

Conventional reactive polyurethane hot-melt adhesives are moisture-curing or moisture-crosslinking adhesives that are solids at room temperature, but they are applied in the form of a melt. The polymeric constituents of the adhesives contain urethane groups and reactive isocyanate groups. Cooling of the melt results first in rapid physical setting of the hot-melt adhesive followed by the chemical reaction of the isocyanate groups still present with moisture from the environment to form a crosslinked infusible adhesive.

However, when applying conventional reactive polyurethane hot-melt adhesive for paper/foil lamination, there are a couple of limitations for this application. Firstly, high viscosity of the conventional reactive polyurethane leads to poor wetting ability and low lamination speed. Meanwhile, high application temperature (*e*.*g*., over than 100°C) is not suitable for paper/film lamination. Furthermore, conventional reactive polyurethanes show poor bonding strength for foil structure. Specifically, after heat seal, fully cured conventional reactive polyurethane adhesive would be easily peeled from foil. EP 0490026A2, US 5532058A, JP 2005146201 A, US 2003/092868 A1 and US 2007/179254 A1 deal with laminates containing polyurethane adhesives based on acid functional polyethers or polyesters.

It is therefore desired in the art a novel polyurethane hot-melt adhesive with improved performances including bond strength, and heat seal strength, especially suitable for adhering foil and paper.

### SUMMARY OF THE DISCLOSURE

The present disclosure provides a polyurethane hot-melt adhesive composition comprising a polyol component and an isocyanate component, wherein the polyol component comprises a polyol having two or more OH groups and a hydrogen-bridging group in a side molecular chain; wherein the polyol having two or more OH groups and a hydrogen bridging group is a polyester polyol; wherein the hydrogen-bridging group is O=C-O-, and protonated forms thereof; wherein the polyol having two or more OH groups and a hydrogen bridging group is at least 4 wt.%, and not to exceed 40 wt.%, based on the weight of adhesive composition; and wherein the polyol having two or more OH groups and a hydrogen bridging group has an acid value of at least 50 mg KOH/ g and not to exceed 200 mgKOH/g; and wherein the polyol component further comprises at least one small molecule weight chain extender, for example diols and triols; and wherein the isocyanate component is selected from the group consisting of aromatic polyisocyanates.

### DETAILED DESCRIPTION OF THE DISCLOSURE

The polyurethane hot-melt adhesive composition according to this disclosure comprises a polyol component and an isocyanate component.

### Polyol Component

The polyurethane hot-melt adhesive composition comprises a polyol component comprising a polyol having two or more OH groups and a hydrogen-bridging group in a side molecular chain; wherein the polyol having two or more OH groups and a hydrogen bridging group is a polyester polyol; wherein the hydrogen-bridging group is O=C-O-, and protonated forms thereof; wherein the polyol having two or more OH groups and a hydrogen bridging group is at least 4 wt.%, and not to exceed 40 wt.%, based on the weight of adhesive composition; and wherein the polyol having two or more OH groups and a hydrogen bridging group has an acid value of at least 50 mg KOH/ g and not to exceed 200 mgKOH/g; and wherein the polyol component further comprises at least one small molecule weight chain extender, for example diols and triols. The polyol component can optionally include adhesion promoters.

The polyol having two or more OH groups and a hydrogen-bridging group is a polyol having two or more terminal OH groups (*i.e.,* at the end of the polyol molecular chain) and at least one hydrogen-bridging group in a side molecular chain (*i.e.,* a branched group). Examples of suitable hydrogen-bridging groups are O=C-O⁻, and pronated forms thereof. The disclosed polyol having two or more OH groups and a hydrogen-bridging group further has an acid value of at least 50 mg KOH/g and not to exceed 200 mg KOH/g. In addition, the disclosed polyol has a molecular weight of at least 400 g/mol and not to exceed 5,000 g/mol. Still further, the disclosed polyol has a hydroxyl group functionality of at least 1.8 and not to exceed 3 (*i.e*., 1.8 ≤ *f* ≤ 3). The polyol having two or more OH groups and a hydrogen-bridging group is a polyester polyol.

The amount of the polyol having two or more OH groups and a hydrogen-bridging group in the adhesive composition is, by weight based on the weight of the adhesive composition, at least 4 wt%. The amount of the polyol having two or more OH groups and a hydrogen-bridging group in the adhesive composition is not to exceed, by weight based on the weight of the adhesive composition, 40 wt%.

A compound with two or more hydroxyl groups is a "polyol." A polyol with exactly two hydroxyl groups is a "diol." A polyol with exactly three hydroxyl groups is a "triol." A compound that contains two or more ester linkages in the same linear chain of atoms is known herein as a "polyester." A compound that is a polyester and a polyol is known herein as a "polyester polyol." The disclosed polyester polyols have a molecular weight not to exceed 4,000 g/mol. In addition, the disclosed polyester polyols have a hydroxyl group functionality of at least 1.5 and not to exceed 3 (*i.e.,* 1.5 ≤ *f* ≤ 3).

Polyester polyols suitable for use according to this disclosure are known polycondensates of diols and also, optionally, polyols (*e*.*g*., triols, tetraols), and of dicarboxylic acids and also, optionally, polycarboxylic acids (*e.g.,* tricarboxylic acids, tetracarboxylic acids) or hydroxycarboxylic acids or lactones. The polyester polyols can also be derived from, instead of the free polycarboxylic acids, the corresponding polycarboxylic anhydrides, or corresponding polycarboxylic esters of lower alcohols.

Suitable diols include, but are not limited to, ethylene glycol, butylene glycol, diethylene glycol, triethylene glycol, polyalkylene glycols, such as polyethylene glycol, and also 1, 2-propanediol, 1, 3-propanediol, 1, 3-butanediol, 1, 4-butanediol, 1, 6-hexanediol, and neopentyl glycol. In order to achieve a polyester polyol functionality greater than 2, polyols having a functionality of 3 can optionally be included in the adhesive composition (*e*.*g*., trimethylolpropane, glycerol, erythritol, pentaerythritol, trimethylolbenzene or trishydroxyethyl isocyanurate).

Suitable dicarboxylic acids include, but are not limited to, aliphatic acids, aromatic acids, and combinations thereof. Examples of suitable aromatic acids include phthalic acid, isophthalic acid, terephthalic acid, and tetrahydrophthalic acid. Examples of suitable aliphatic acids include hexahydrophthalic acid, cyclohexane dicarboxylic acid, adipic acid, azelaic acid, sebacic acid, glutaric acid, tetrachlorophthalic acid, maleic acid, fumaric acid, itaconic acid, malonic acid, suberic acid, 2-methyl succinic acid, 3,3-diethyl glutaric acid, 2,2-dimethyl succinic acid, and trimellitic acid. As used herein, the term "acid" also includes any anhydrides of said acid. Further, monocarboxylic acids, such as benzoic acid and hexane carboxylic acid, should be minimized or excluded from the disclosed compositions. Saturated aliphatic or aromatic acids are preferred, such as adipic acid or isophthalic acid.

A compound that contains two or more ether linkages in the same linear chain of atoms is known herein as a "polyether." A compound that is a polyether and a polyol is a "polyether polyol." The disclosed polyether polyols have a molecular weight not to exceed 5,000 g/mol. In addition, the disclosed polyether polyols have a hydroxyl group functionality of at least 1.5 and not to exceed 4 (*i.e.,* 1.5 ≤ *f* ≤ 4).

Polyether polyols suitable for use according to this disclosure are the polyaddition products of ethylene oxide, propylene oxide, tetrahydrofuran, butylene oxide, and the co-addition and grafted products thereof, as well as the polyether polyols obtained by condensation of polyhydric alcohols or mixtures thereof. Examples of polyether polyols suitable for use include, but are not limited to, polypropylene glycol ("PPG"), polyethylene glycol ("PEG"), polybutylene glycol, and polytetramethylene ether glycol ("PTMEG").

The disclosed polyol component may optionally further comprise a bio-based polyol, such as castor oil or other known bio-based polyols. The disclosed bio-based polyol has a hydroxyl group functionality of at least 1.5 and not to exceed 4 (*i.e.,* 1.5 ≤ *f* ≤ 4).

The disclosed polyol component may optionally further comprise some small molecule weight chain extenders, which include, but are not limited to, diols and triols, such as ethylene glycol, butylene glycol, diethylene glycol, triethylene glycol, polyalkylene glycols, such as polyethylene glycol, and also 1, 2-propanediol, 1, 3-propanediol, 1, 3-butanediol, 1, 4-butanediol, 1, 6-hexanediol, neopentyl glycol, trimethylolpropane, glycerol, erythritol, pentaerythritol, trimethylolbenzene, and tris hydroxyethyl isocyanurate.

### Isocyanate Component

The isocyanate component is selected from the group consisting of aromatic polyisocyanates.

As used herein, a "polyisocyanate" is any compound that contains two or more isocyanate groups. An "aromatic polyisocyanate" is a polyisocyanate that contains one or more aromatic rings. An "aliphatic polyisocyanate" contains no aromatic rings.
Examples of aromatic polyisocyanates suitable for use according to this disclosure include, but are not limited to, isomers of methylene diphenyl dipolyisocyanate ("MDI") such as 4, 4-MDI, 2, 4-MDI and 2,2'-MDI, isomers of toluene-dipolyisocyanate ("TDI") such as 2, 4-TDI, 2, 6-TDI, isomers of naphthalene-dipolyisocyanate ("NDI") such as 1, 5-NDI, and combinations thereof.
In some embodiments, the aromatic polyisocyanate comprises isomers of MDI.

Polyisocyanate compounds may be characterized by the parameter "%NCO," which is the amount of polyisocyanate groups by weight based on the weight of the compound. The parameter %NCO is measured by the method of ASTM D 2572-97(2010). The disclosed isocyanate component has a %NCO of at least 2 wt%, or at least 5 wt%, or at least 7 wt%. In some embodiments, the isocyanate component has a %NCO not to exceed 30 wt%, or 25 wt%, or 22 wt%, or 19 wt%.

In some embodiments, the isocyanate component has viscosity at 25°C of 300 mPa-s to 100,000 mPa-s, as measured by the method of ASTM D2196.

The isocyanate component can, optionally, comprise one or more catalysts. Examples of the at least one catalyst suitable for use according to this disclosure include, but are not limited to, dibutyltin dilaurate, zinc acetate, 2,2-dimorpholinodiethylether, and combinations thereof.

In some embodiments, the weight ratio of the isocyanate component to the polyol component is 4:1 or higher, or 4.5:1 or higher; or 5:1 or higher. In some embodiments, the weight ratio of the isocyanate component to the polyol component is 1:1 or lower, or 1:2 or lower, or 1:4 or lower.

In some embodiments, the adhesive composition optionally comprises adhesion promoters such as aminosilanes.

The preparation of the polyurethane hot-melt adhesive composition is in any way known to those of ordinary skill in the art, and includes condensation polymerization. The stoichiometry of the polyurethane adhesive composition formulation disclosure is such that the diisocyanate is present in excess, and the polyurethane adhesive composition is NCO group terminated. In some embodiments, the polyurethane adhesive composition has an isocyanate content (also known as %NCO, as measured by ASTM D2572) of from 3 to 10%, or from 4 to 9%, or from 5 to 8%.

A laminate using the polyurethane adhesive composition is also disclosed. In some embodiments, the polyurethane adhesive composition is in a liquid state. In some embodiments, the composition is a liquid at 25°C. Even if the composition is solid at 25°C, it is acceptable to heat the composition as necessary to put it in a liquid state. A layer of the polyurethane adhesive composition may be applied to a surface of a foil, or a surface of paper by a coating roller, followed by an addition of water onto the polyurethane adhesive composition layer. A "foil" is a structure that is 6 µm to 20 µm in one dimension and is 1 cm or more in both of the other two dimensions. Preferably, the foil is made of aluminum. "Paper" is a structure that is 10 µm to 200 µm in one dimension and is 1 cm or more in both of the other two dimensions. "Paper" is made of vegetable fiber or polymer resin, and suitable examples include kraft paper, white cardboard, offset paper, art paper. A surface of paper (or a surface of a foil) was further laminated with the foil/adhesive (or paper/adhesive) composite through a pressure roller to form a foil/adhesive/paper (or paper/adhesive/foil) laminate.

### EXAMPLES

The present disclosure will now be explained in further detail by Illustrative Examples and Comparative Examples (collectively, "the Examples"). However, the scope of the present disclosure is not, of course, limited to the formulations set forth in the examples. Rather, the Examples are merely illustrative of the disclosure.

### Polyurethane Adhesive Composition Preparation

The raw materials used to prepare the Examples are identified in Table 1 below by commercial name and supplier.

**Table 1: Raw Materials**

| Raw Material | Supplier |
|---|---|
| BESTER^{™} 648 polyester polyol (MW=820) | The Dow Chemical Company |
| DESMODUR^{™} 2460 M liquid methylene diphenyl dipolyisocyanate | Bayer Company |
| DMPA^{™} Polyol HA-0135 polyester polyol (polyester polyol containing a COOH group) | The GEO Group |
| 2-methyl-1.3-propane diol | Sinopharm Chemical Reagent Company |
| VORANOL^{™} P1010L polyether polyol (MW=1000) | The Dow Chemical Company |
| polytetramethylene ether glycol (PTMG, MW=850) | The Kaiteki Company |
| hydrogenated phenyl methane diisocyanate | Wanhua Chemical Group |

Polyurethane Adhesive Composition Examples (Illustrative Examples 1 to 7 (IE1-7) and Comparative Examples 1 to 3 (CE1-3)) are synthesized following the below procedure: step 1) charging isocyanate component(s) into a reactor and keeping it at 60°C with nitrogen protection, step 2) charging polyol component(s) slowly into the same reactor at an increased temperature of around 80°C and holding until "%NCO" reaches the calculated range. The prepared polyurethane adhesive compositions are then used to form laminates with paper and aluminum foils for performance tests.

**Table 2: Polyurethane Adhesive Composition Examples CE1-3, and IE1-7**

| Formulation | | CE1 | CE2 | IE1 | IE2 | CE3 | IE3 | IE4 | IE5 | IE6 | IE7 |
|---|---|---|---|---|---|---|---|---|---|---|---|
| Isocyanate | DESMODUR^{™} 2460 M liquid methylene diphenyl dipolyisocyanate | 312 | 312 | 312 | 312 | 312 | 312 | 312 | 312 | 312 | - |
| | hydrogenated phenyl methane diisocyanate | - | - | - | - | - | - | - | - | - | 312 |
| Polyol | DMPA^{™} Polyol HA-0135 polyester polyol | - | 24 | 48 | 72 | 24 | 48 | 72 | 96 | 120 | 321 |
| | BESTER^{™} 648 polyester polyol | 100 | 100 | 100 | 100 | - | - | - | - | - | - |
| | 2-diethyl-1,3-propane diol | 20 | 20 | 20 | 20 | 20 | 20 | 20 | 20 | 20 | - |
| | VORANOL^{™} P1010L polyether polyol | 330 | 306 | 282 | 258 | 306 | 282 | 258 | 234 | 210 | 100 |
| | PTMG 850 | | | | | | 100 | 100 | 100 | 100 | |

### Laminates Performance Tests

The adhesive compositions are applied to the paper at 3.5 gsm coating weight, brought together with the aluminum film, and then cured at 50°C for 24 hours to form the laminates. Once the laminate is formed, tests are conducted to analyze the bond strength and heat seal strength,

### 1. Substrate tear test

After curing, the laminated films are cut into 15 mm width strips for T-peel testing in an Instron 5943 Machine with 250 mm/min crosshead speed. Three strips are tested to take an average value. During the test, the tail of the strip is pulled slightly by finger to make sure the tail remained 90 degree to the peeling direction. The damage rate of paper surface after tear test is recorded as lamination fastness.

### 2. Heat seal strength test

The laminates are heat-sealed in a HSG-C Heat-Sealing Machine available from Brugger Company under 220°C seal temperature and 300N pressure for 1 second, then cooled down and cut into 15 mm width strips for heat seal strength test under 250 mm/min crosshead speed using a 5940 Series Single Column Table Top System available from Instron Corporation. Three strips for each sample are tested and the average value is calculated. Results are in the unit of N/15mm.

### 3. Viscosity test

Laminates are put in a warm oven at 100°C for a couple of hours before testing. Viscosity was measured at 100°C in a Brookfield DV-II viscometer using a 27 spindle. The rotation speed is 12 RM, and the laminates are tested for 20 minutes for a stable rotation speed.

**Table 3: Performance Test Results**

| | Damage rate after substrate tear | Heat seal strength (N/15mm) | Appearance of paper/foil laminates | Viscosity (mpa.s) |
|---|---|---|---|---|
| CE1 | <20% | 56 | Delamination | 620 |
| CE2 | 40%-50% | 58 | Tunnel | 843 |
| IE1 | >90% | 56 | Good | 1031 |
| IE2 | >90% | 58 | Good | 1532 |
| CE3 | 40%-50% | 57 | Tunnel | 692 |
| IE3 | 80%-90% | 58 | Good | 859 |
| IE4 | >90% | 57 | Good | 1378 |
| IE5 | >90% | 59 | Good | 1980 |
| IE6 | >90% | 59 | Good | 3400 |
| IE7 | >90% | 58 | Good | 2200 |

The Illustrative Examples exhibit good bond strength and heat seal strength for paper/foil lamination, compared to Comparative Examples. With the content increase of DMPA^{™} Polyol HA-01 35 polyester polyol, higher paper broken ratio after tear test was detected. When the content of DMPA^{™} Polyol HA-0135 polyester polyol reaches 6.3%, paper broken ratio after tear test becomes stable and reaches 90% broken ratio. However, when DMPA^{™} Polyol HA-0135 polyester polyol content is less than 6.3%, paper broken ratio is low which is not acceptable for this application. Furthermore, tunnel and de-lamination are detected after heat seal for Comparative Examples.

## Claims

1. A polyurethane hot-melt adhesive composition comprising a polyol component and an isocyanate component, wherein the polyol component comprises a polyol having two or more OH groups and a hydrogen-bridging group in a side molecular chain;
wherein the polyol having two or more OH groups and a hydrogen bridging group is a polyester polyol;
wherein the hydrogen-bridging group is O=C-O⁻, and protonated forms thereof;
wherein the polyol having two or more OH groups and a hydrogen bridging group is at least 4 wt%, and not to exceed 40 wt%, based on the weight of adhesive composition; and
wherein the polyol having two or more OH groups and a hydrogen bridging group has an acid value of at least 50 mg KOH/g and not to exceed 200 mg KOH/g; and
wherein the polyol component further comprises at least one small molecule weight chain extender, for example diols and triols; and
wherein the isocyanate component is selected from the group consisting of aromatic polyisocyanates.

2. The polyurethane hot-melt adhesive composition according to Claim 1 wherein the polyol having two or more OH groups and a hydrogen-bridging group has a molecular weight of at least 400 g/mol and not to exceed 5,000 g/mol.

3. The polyurethane hot-melt adhesive composition according to Claim 1 wherein the polyol having two or more OH groups and a hydrogen-bridging group has a hydroxyl group functionality of at least 1.8 and not to exceed 3.

4. The polyurethane hot-melt adhesive composition according to Claim I wherein the isocyanate component has a %NCO of at least 2 wt%, and not to exceed 30 wt%, measured as defined in the description.

5. A laminate comprising a foil, paper and the polyurethane hot-melt adhesive composition of claim 1, wherein the foil and paper are adhered with the polyurethane hot-melt adhesive composition, wherein a foil is a structure that is 6 µm to 20 µm in one dimension and is 1 cm or more in both of the other two dimensions, and is made of aluminum, and wherein paper is a structure that is 10 µm to 200 µm in one dimension and is 1 cm or more in both of the other two dimensions, and is made of vegetable fiber or polymer resin.

## Patentansprüche

1. Polyurethan-Schmelzklebstoffzusammensetzung, die eine Polyolkomponente und eine Isocyanatkomponente umfasst, wobei die Polyolkomponente ein Polyol mit zwei oder mehr OH-Gruppen und eine wasserstoffverbrückende Gruppe in einer molekularen Seitenkette umfasst;
wobei das Polyol zwei oder mehr OH-gruppen aufweist und eine wasserstoffverbrückende Gruppe ein Polyesterpolyol ist;
wobei die wasserstoffverbrückende Gruppe O=C-O⁻ und protonierte formen davon ist;
wobei das Polyol zwei oder mehr OH-Gruppen aufweist und eine wasserstoffverbrückende Gruppe in Bezug auf das Gewicht der Klebstoffzusammensetzung mindestens 4 Gew.-% und höchstens 40 Gew.-% ausmacht; und
wobei das Polyol zwei oder mehr OH-Gruppen aufweist und eine wasserstoffverbrückende Gruppe eine Säurezahl von mindestens 50 mg KOH/g und höchstens 200 mg KOH/g aufweist; und
wobei die Polyolkomponente ferner mindestens einen niedermolekularen Kettenverlängerer, z. B. Diole und Triole, umfasst; und
wobei die Isocyanatkomponente aus der Gruppe ausgewählt ist, die aus aromatischen Polyisocyanaten besteht.

2. Polyurethan-Schmelzklebstoffzusammensetzung nach Anspruch 1, wobei das Polyol zwei oder mehr OH-Gruppen aufweist und eine wasserstoffverbrückende Gruppe ein Molekulargewicht von mindestens 400 g/mol und höchstens 5000 g/mol aufweist.

3. Polyurethan-Schmelzklebstoffzusammensetzung nach Anspruch 1, wobei das Polyol zwei oder mehr OH-Gruppen aufweist und eine wasserstoffverbrückende Gruppe eine Hydroxylgruppenfunktionalität von mindestens 1,8 und höchstens 3 aufweist.

4. Polyurethan-Schmelzklebstoffzusammensetzung nach Anspruch 1, wobei die Isocyanatkomponente laut Messung wie in der Beschreibung definiert einen NCO-Prozentsatz von mindestens 2 Gew.-% und höchstens 30 Gew.-% aufweist.

5. Laminat, das eine Folie, Papier und die Polyurethan-Schmelzstoffzusammensetzung nach Anspruch 1 umfasst, wobei die Folie und das Papier mit der Polyurethan-Schmelzklebstoffzusammensetzung verklebt sind, wobei eine Folie eine Struktur ist, die in einer Abmessung 6 µm bis 20 µm aufweist und in beiden der anderen zwei Abmessungen 1 cm oder mehr hat und aus Aluminium hergestellt ist, und wobei Papier eine Struktur ist, die in einer Abmessung 10 µm bis 200 µm aufweist und in beiden der anderen zwei Abmessungen 1 cm oder mehr hat und aus pflanzlicher Faser oder Polyesterharz hergestellt ist.

## Revendications

1. Composition adhésive thermofusible de polyuréthane comprenant un composant polyol et un composant isocyanate, dans laquelle le composant polyol comprend un polyol ayant deux ou plus de deux groupes OH et un groupe de pontage hydrogène dans une chaîne moléculaire latérale ;
dans laquelle le polyol ayant deux ou plus de deux groupes OH et un groupe de pontage hydrogène est un polyester polyol ;
dans laquelle le groupe de pontage hydrogène est O=C-O⁻ et ses formes protonées ;
dans laquelle le polyol ayant deux ou plus de deux groupes OH et un groupe de pontage hydrogène représente au moins 4 % en poids et ne dépasse pas 40 % en poids par rapport au poids de la composition adhésive ; et
dans laquelle le polyol ayant deux ou plus de deux groupes OH et un groupe de pontage hydrogène a un indice d'acide d'au moins 50 mg KOH/g et ne dépassant pas 200 mg KOH/g ; et
dans laquelle le composant polyol comprend en outre au moins un agent d'allongement de chaîne à petite molécule, par exemple les diols et triols ; et
dans laquelle le composant isocyanate est choisi dans l'ensemble constitué par les polyisocyanates aromatiques.

2. Composition adhésive thermofusible de polyuréthane selon la revendication 1, dans laquelle le polyol ayant deux ou plus de deux groupes OH et un groupe de pontage hydrogène a une masse moléculaire d'au moins 400 g/mol et ne dépassant pas 5 000 g/mol.

3. Composition adhésive thermofusible de polyuréthane selon la revendication 1, dans laquelle le polyol ayant deux ou plus de deux groupes OH et un groupe de pontage hydrogène a une fonctionnalité de groupes hydroxyle d'au moins 1,8 et ne dépassant pas 3.

4. Composition adhésive thermofusible de polyuréthane selon la revendication 1, dans laquelle le composant isocyanate a un pourcentage de NCO d'au moins 2 % en poids et ne dépassant pas 30 % en poids, mesuré comme défini dans la description.

5. Stratifié comprenant une feuille, un papier et la composition adhésive thermofusible de polyuréthane de la revendication 1, dans lequel la feuille et le papier adhèrent avec la composition adhésive thermofusible de polyuréthane, dans lequel la feuille est une structure qui fait 6 µm à 20 µm dans une dimension et fait 1 cm ou plus dans les deux autres dimensions, et est faite d'aluminium, et dans lequel le papier est une structure qui fait 10 µm à 200 µm dans une dimension et fait 1 cm ou plus dans les deux autres dimensions, et est faite de fibres végétales ou de résine polymère.
